# EUROPEAN PATENT APPLICATION

(11) **EP 0 561 086 A1**
(43) Date of publication of application: **22.09.1993**
(21) Application number: 92400757.8
(22) Date of filing: 20.03.1992
(51) Int. Cl.: B44C 5/04, B32B 27/06

(54) **Decorative laminate board**

(71) Applicant: NIPPON DECOLUXE KABUSHIKI KAISHA, Niwa-gun, Aichi-ken (JP)
(72) Inventor: Kimura, Michio, Nagoya-shi, Aichi-ken (JP)
(74) Representative: Bloch, Gérard

(57) **Abstract**

A decorative laminate board is formed of a hard vinyl chloride resin sheet (1), a phenol resin adhesive layer (2), a melamine-resin-impregnated layer (3), and a melamine-resin-impregnated overlay (31).

## Description

### BACKGROUND OF THE INVENTION

### 1) Field of the Invention

This invention relates to a decorative laminate board, and especially to a decorative laminate board useful as flooring or as a desk surface.

### 2) Description of the Related Art

Thermosetting resins such as melamine resin have been used conventionally for surface layers of decorative laminate boards employed as surfaces for desks. In such conventional decorative laminate boards, thermosetting resins such as phenol resin are also used in their base layers. For surface layers of decorative laminate boards employed as flooring or the like, on the other hand, thermoplastic resins such as vinyl chloride resin are used. In this case, thermoplastic resins such as vinyl chloride resin are also used in their base layers.

A decorative laminate board in which a thermosetting resin such as melamine resin is used has excellent heat resistance and abrasion resistance at the surface thereof but has problems associated with softness, cushioning properties and sound absorbing properties. On the other hand, a decorative laminate board in which a thermoplastic resin such as vinyl chloride resin is used has excellent in softness, cushioning properties and sound absorbing properties but is accompanied by problems associated with heat resistance and abrasion resistance at the surface thereof.

### SUMMARY OF THE INVENTION

An object of the present invention is to overcome the above-described problems and to provide a decorative laminate board which has excellent heat resistance and abrasion resistance at the surface thereof and is also superb with regard to softness, cushioning properties and sound absorbing properties.

To overcome the problems described above and also to achieve the object of this invention, the present invention provides a decorative laminate board which comprises a base layer made of vinyl chloride resin as a principal material, an adhesive layer formed on the base layer, and a layer impregnated with a resin selected from the group consisting of melamine resin and diallyl phthalate resin and formed on the adhesive layer. The base layer, adhesive layer and impregnated layer have been integrally laminated. The layer formed on the adhesive layer can be either a paper layer or a fabric layer, which has been impregnated with either melamine resin or diallyl phthalate resin.

Owing to the above-described construction, the decorative laminate board according to the present invention has the advantages that it has excellent heat resistance and abrasion resistance at the surface thereof and is also superb with regard to softness, cushioning properties and sound absorbing properties.

### BRIEF DESCRIPTION OF THE DRAWING

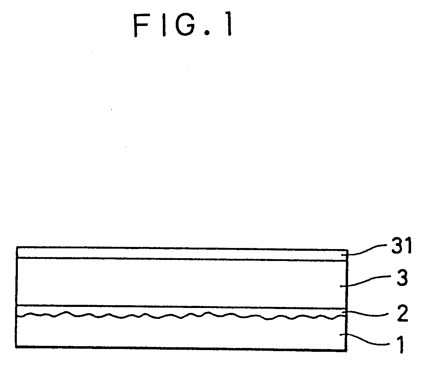

The above and other objects, features and advantages of the present invention will become apparent from the following description and the appended claims, taken in conjunction with the accompanying sole drawing, in which FIG. 1 is a side view of a decorative laminate board according to one embodiment of the present invention.

### DETAILED DESCRIPTION OF THE INVENTION

The base layer is made of vinyl chloride resin as a principle material. The vinyl chloride resin may be of either a hard type or a soft type. Recycled vinyl chloride resin can also be used. Although base layers of various shapes can be used, it is suitable to use a sheet-like base layer whose thickness ranges from about 0.5 mm to about 3.0 mm. The base layer may include a non-woven glass fabric or the like as a reinforcing material and/or calcium carbonate, clay, wollastonite or the like as an extender.

The adhesive layer is formed on the base layer. Various resins can be used as base materials, with phenol resin, a modified phenol resin, an unsaturated polyester resin or an epoxy resin being suitable. An adhesive formulation is coated in a liquid form by curtain coating, roller coating, spray coating or the like. The preferred wet coat weight may range from 10 g/m² to 50 g/m². The adhesive formulation so coated is dried at a temperature of 50-100°C into a semi-hardened state. The adhesive layer may be in the form of a resin-impregnated paper sheet or fabric formed by coating and impregnating a paper sheet or non-woven glass fabric as a base material with phenol resin, a modified phenol resin or an acrylic resin in an amount of 100-200 parts by weight per 100 parts by weight of the base material and then drying the thus-impregnated paper sheet or non-woven glass fabric. As a further alternative, the adhesive layer may be composed of a liquid adhesive formulation and a resin-impregnated paper sheet or fabric.

The resin-impregnated layer is formed on the adhesive layer. It can be a paper or fabric layer impregnated with either melamine resin or diallyl phthalate resin.

A paper sheet or fabric impregnated with melamine resin can be obtained in the following manner. A decorative paper sheet or decorative fabric is dipped in a melamine resin formulation (resin content: 40-50%) to impregnate the decorative paper sheet or decorative fabric with the melamine resin formulation in an amount of 160-300 parts by weight per 100 parts by weight of the decorative paper sheet or decorative fabric. The decorative paper sheet or decorative fabric so impregnated is then dried into a semi-hardened state.

Preferably, the decorative laminate board according to the present invention is provided with an overlay as a surface or protective layer. This overlay therefore imparts still better heat resistance and abrasion resistance to the surface of the decorative laminate board. An overlay of melamine resin can be formed by dipping an overlay paper sheet with a melamine resin formulation (resin content: 40-50%) to impregnate the overlay paper sheet with the melamine resin formulation in an amount of 400-750 parts by weight per 100 parts by weight of the overlay paper sheet and then drying the thus-impregnated overlay paper sheet into a semi-dried state.

A paper sheet or fabric impregnated with diallyl phthalate resin can be obtained in the following manner. A decorative paper sheet or decorative fabric is dipped in a diallyl phthalate resin formulation (resin content: 40-50%) to impregnate the decorative paper sheet or decorative fabric with the diallyl phthalate resin formulation in an amount of 160-300 parts by weight per 100 parts by weight of the decorative paper sheet or decorative fabric. The decorative paper sheet or decorative fabric so impregnated is then dried, whereby the diallyl phthalate resin formulation is brought into a semi-hardened state.

An overlay of diallyl phthalate resin can be formed by dipping an overlay paper sheet with a diallyl phthalate resin formulation (resin content: 40-50%) to impregnate the overlay paper sheet with the diallyl phthalate resin formulation in an amount of 400-750 parts by weight per 100 parts by weight of the overlay paper sheet and then drying the thus-impregnated overlay paper sheet to bring the diallyl phthalate resin formulation into a semi-dried state.

The decorative laminate board according to the present invention can be obtained by laminating the above-described base layer, adhesive layer and resin-impregnated paper or fabric layer into an integral structure. The base layer, adhesive layer and resin-impregnated paper or fabric layer are stacked one over another, heated and then pressed into the integral structure. Their heating and pressing can be effected under 10-100 kg/cm² at 100-150°C for about 10-30 minutes by a known heating and pressing method such as hot-pressing. By this heating and pressing, the base layer is molten so that the base layer is integrated with the adhesive layer. At the same time, the resin-impregnated paper or fabric layer is hardened so that the resin-impregnated paper or fabric layer is integrated with the adhesive layer.

The present invention will hereinafter be described in detail by the following examples depicted in the accompanying sole drawing. The decorative laminate board according to one embodiment of this invention is shown in FIG. 1, in which there are shown a base layer 1, an adhesive layer 2, a resin-impregnated paper layer 3 and an overlay 31.

### Example 1

As the base layer 1, a hard vinyl chloride resin sheet of 0.5 mm in thickness is used. The adhesive layer 2 is formed by applying phenol resin in a liquid form at a wet coating rate of 50 m/m² to the upper side of the base layer 1 by a spray gun (orifice diameter: 0.5 mm)/. The resultant adhesive-coated resin sheet is dried at 50°C for 30 seconds in an oven with internal air circulation, whereby the adhesive formulation is brought into a semi-hardened state. The resin-impregnated paper layer 3 is formed by dipping a decorative paper sheet, whose basis weight is 100 g/m², in a melamine resin formulation (resin content: 45%) to impregnate the decorative paper sheet with the melamine resin formulation in an amount of 220 parts by weight per 100 parts by weight of the decorative paper sheet and then drying the thus-impregnated decorative paper sheet at 100°C for 2 minutes to bring the melamine resin formulation into a semi-hardened state. Further, an overlay paper sheet having a basis weight of 20 g/m² is dipped in a melamine resin formulation (resin content: 50%) to impregnate the overlay paper sheet with 120g/m² of the melamine resin formulation. The thus-impregnated overlay paper sheet is dried at 100°C for 1 minute to bring the melamine resin formulation into a semi-hardened state. The resulting impregnated overlay paper sheet is provided as a top layer.

The base layer 1, adhesive layer 2 and resin-impregnated layer 3 are successively stacked one over another, and the overlay 31 is stacked further on the resin-impregnated layer 3. Using a hot press, they are next heated and pressed under 50 kg/cm² at 130°C for about 10 minutes. While being pressed, they are cooled to room temperature. By the above heating and pressing, the base layer is molten and integrated with the adhesive layer and, at the same time, the resin-impregnated paper layer is hardened and integrated with the adhesive layer.

The resultant laminate board is taken out of the hot press, whereby a 0.6 mm thick, decorative laminate board with the vinyl chloride resin sheet and the melamine-resin-impregnated decorative paper sheet integrated together, said decorative laminate board having heat resistance and cushioning properties, is obtained.

### Example 2

As the base layer 1, two 1.0 mm thick, soft vinyl chloride resin sheets are used and a 40 g/m² non-woven glass fabric is interposed as a reinforcing material therebetween. The adhesive layer 2 is formed by dipping a 140 g/m², unbleached kraft paper sheet in a modified phenol resin formulation (resin content: 50%) to impregnate the paper sheet with 170 g/m² of the resin formulation and then drying the thus-impregnated paper sheet at 130°C for 1 minute in an oven with internal air circulation, whereby the modified phenol resin formulation is brought into a semi-hardened state. The resin-impregnated paper layer 3 is formed by dipping a decorative paper sheet, whose basis weight is 100 g/m², in a melamine resin formulation (resin content: 45%) to impregnate the decorative paper sheet with the melamine resin formulation in an amount of 220 parts by weight per 100 parts by weight of the decorative paper sheet and then drying the thus-impregnated decorative paper sheet at 100°C for 2 minutes to bring the melamine resin formulation into a semi-hardened state. Further, an overlay paper sheet is dipped in a melamine resin formulation (resin content: 50%) to impregnate the overlay paper sheet with 120g/m² of the melamine resin formulation. The thus-impregnated overlay paper sheet is dried at 100°C for 1 minute to bring the melamine resin formulation into a semi-hardened state. The resulting impregnated overlay paper sheet is provided as a top layer.

The base layer 1, adhesive layer 2 and resin-impregnated layer 3 are successively stacked one over another, and the overlay 31 is stacked further on the resin-impregnated layer 3. Using a hot press, they are next heated and pressed under 50 kg/cm² at 130°C for about 10 minutes. While being pressed, they are cooled to room temperature. By the above heating and pressing, the base layer is molten and integrated with the adhesive layer and, at the same time, the resin-impregnated paper layer is hardened and integrated with the adhesive layer.

The resultant laminate board is taken out of the hot press, whereby a 2.5 mm thick, decorative laminate board with the vinyl chloride resin sheets and the melamine-resin-impregnated decorative paper sheet integrated together, said decorative laminate board having heat resistance and cushioning properties, is obtained.

### Example 3

As the base layer 1, two 1.0 mm thick, soft vinyl chloride resin sheets are used and a 40 g/m² non-woven glass fabric is interposed as a reinforcing material therebetween. The adhesive layer 2 consists of a modified phenol resin layer and a phenol-resin-impregnated paper layer. The modified phenol resin layer is formed by applying a modified phenol resin formulation at a wet coating rate of 10 g/m² to the upper side of the upper vinyl chloride resin sheet by curtain coating and then drying the vinyl chloride resin sheets for 30 seconds in a drying oven, whose atmosphere is controlled at 100°C, to bring the modified phenol resin formulation into a semi-hardened state. The phenol-resin-impregnated paper layer is formed by dipping a 140 g/m², unbleached kraft paper sheet in a phenol resin formulation (resin content: 50%) to impregnate the paper sheet with 170 g/m² of the resin formulation and then drying the thus-impregnated paper sheet at 130°C for 1 minute in an oven with internal air circulation, whereby the phenol resin formulation is brought into a semi-hardened state. The resin-impregnated paper layer 3 is formed by dipping a decorative paper sheet, whose basis weight is 100 g/m², in a melamine resin formulation (resin content: 45%) to impregnate the decorative paper sheet with the melamine resin formulation in an amount of 220 parts by weight per 100 parts by weight of the decorative paper sheet and then drying the thus-impregnated decorative paper sheet at 100°C for 2 minutes to bring the melamine resin formulation into a semi-hardened state. Further, an overlay paper sheet is dipped in a melamine resin formulation (resin content: 50%) to impregnate the overlay paper sheet with 120 g/m² of the melamine resin formulation. The thus-impregnated overlay paper sheet is dried at 100°C for 1 minute to bring the melamine resin formulation into a semi-hardened state. The resulting impregnated overlay paper sheet is provided as a top layer.

The base layer 1, adhesive layer 2 and resin-impregnated layer 3 are successively stacked one over another, and the overlay 31 is stacked further on the resin-impregnated layer 3. Using a hot press, they are next heated and pressed under 50 kg/cm² at 130°C for about 10 minutes. While being pressed, they are cooled to room temperature. By the above heating and pressing, the base layer is molten and integrated with the adhesive layer and, at the same time, the resin-impregnated paper layer is hardened and integrated with the adhesive layer.

The resultant laminate board is taken out of the hot press, whereby a 2.5 mm thick, decorative laminate board with the vinyl chloride resin sheets and the melamine-resin-impregnated decorative paper sheet integrated together, said decorative laminate board having heat resistance and cushioning properties, is obtained.

### Example 4

As the base layer 1, two 1.0 mm thick, soft vinyl chloride resin sheets are used and a 40 g/m² non-woven glass fabric is interposed as a reinforcing material therebetween. The adhesive layer 2 is formed by coating an acrylic resin (polymethyl methacrylate) formulation at a wet coating rate of 30 g/m² on the upper side of the base layer 1 by a bar coater and then drying the thus-coated base layer at 80°C for 3 minutes to bring the acrylic resin formulation into a semi-hardened state. The resin-impregnated paper layer 3 is formed by dipping a decorative paper sheet, whose basis weight is 80 g/m², in a diallyl phthalate resin formulation (resin content: 40%) to impregnate the decorative paper sheet with 160 g/m² of the diallyl phthalate resin formulation and then drying the thus-impregnated decorative paper sheet at 80°C for 2 minutes and then at 100°C for 1 minute to bring the diallyl phthalate resin formulation into a semi-hardened state. Further, an overlay paper sheet is dipped in a diallyl phthalate resin formulation (resin content: 40%) to impregnate the overlay paper sheet with 100 g/m² of the diallyl phthalate resin formulation. The thus-impregnated overlay paper sheet is dried at 80°C for 2 minute to bring the diallyl phthalate resin formulation into a semi-hardened state. The resulting impregnated overlay paper sheet is provided as a top layer.

The base layer 1, adhesive layer 2 and resin-impregnated layer 3 are successively stacked one over another, and the overlay 31 is stacked further on the resin-impregnated layer 3. Using a hot press, they are next heated and pressed under 50 kg/cm² at 130°C for about 10 minutes. While being pressed, they are cooled to room temperature. By the above heating and pressing, the base layer is molten and integrated with the adhesive layer and, at the same time, the resin-impregnated paper layer is hardened and integrated with the adhesive layer.

The resultant laminate board is taken out of the hot press, whereby a 2.5 mm thick, decorative laminate board with the vinyl chloride resin sheets and the diallyl-phthalate-resin-impregnated decorative paper sheet integrated together, said decorative laminate board having heat resistance and cushioning properties, is obtained.

## Claims

1. A decorative laminate board comprising a base layer (1) made of vinyl chloride resin as a principal material, an adhesive layer (2) formed on the base layer (1), and a layer impregnated (3) with a resin selected from the group consisting of melamine resin and diallyl phthalate resin and formed on the adhesive layer (2), said base layer (1), adhesive layer (2) and impregnated layer (3) having been integrally laminated.

2. The board of claim 1, wherein the layer formed on the adhesive layer (2) has been impregnated with melamine resin.

3. The board of claim 2, wherein the layer formed on the adhesive layer (2) is a paper layer impregnated with melamine resin.

4. The board of claim 2, wherein the layer formed on the adhesive layer (2) is a fabric layer impregnated with melamine resin.

5. The board of claim 1, wherein the layer formed on the adhesive layer (2) has been impregnated with diallyl phthalate resin.

6. The board of claim 5, wherein the layer formed on the adhesive layer (2) is a paper layer impregnated with diallyl phthalate resin.

7. The board of claim 5, wherein the layer formed on the adhesive layer (2) is a fabric layer impregnated with diallyl phthalate resin.
